# EUROPEAN PATENT SPECIFICATION

(11) **EP 1 278 668 B1**
(45) Date of publication and mention of the grant of the patent: **08.08.2012**
(21) Application number: 01926317.7
(22) Date of filing: 30.04.2001
(51) Int. Cl.: B60T 13/58, B60T 10/02, B60T 1/087, B60T 7/12, B60T 8/24

(54) **DEVICE AND METHOD FOR DETERMINING A HIGHEST ALLOWABLE VELOCITY OF A VEHICLE**
VORRICHTUNG UND VERFAHREN ZUR FESTSTELLUNG DER ZULÄSSIGEN HÖCHSTGESCHWINDIGKEIT EINES FAHRZEUGES
DISPOSITIF ET PROCEDE DE DETERMINATION DE LA VITESSE MAXIMALE AUTORISEE POUR UN VEHICULE

(30) Priority: 02.05.2000 SE 0001586
(43) Date of publication of application: 29.01.2003
(73) Proprietor: Volvo Articulated Haulers AB, 351 83 Växjö (SE)
(72) Inventor: PERSSON, Per-Ake, S-352 35 Växjö (SE); ELIASSON, Göran, S-360 42 Braas (SE); ENGSTRÖM, Thomas, S-342 91 Växjö (SE)
(74) Representative: Andersson, Per Rune
(86) International application number: PCT/SE2001/000933
(87) International publication number: WO 2001/085510

(56) References cited:
- DE-A1- 19 615 311
- US-A- 4 531 300
- US-A- 4 964 679
- US-A- 5 070 959

## Description

### TECHNICAL FIELD

The present invention relates to an arrangement for determining a maximum allowed velocity of a vehicle when going downhill, according to the preamble of the appended claim 1. The invention also relates to a method for determining a maximum allowed velocity of a vehicle, according to the preamble of appended claim 7.

### BACKGROUND ART

In connection with transportation of heavy loads, e.g. in contracting work, vehicles of the articulated hauler type are frequently used. Such vehicles may be operated with large and heavy loads in areas where there are no roads, for example during transports in connection with road and tunnel building, sand pits, mines and similar environments.

An articulated hauler of an as such known kind is constructed with a forward vehicle section, a so-called engine unit, in turn comprising a forward frame, supporting a/o an engine and a front wheel axle. Further, the hauler comprises a rear vehicle section in the form of a load-carrying unit having a rear frame in turn supporting two wheel axles, a forward bogie axis and a rear bogie axis. The vehicle is commonly designed for switching between operations using various driving wheel combinations, all six wheels on the three axes being selectively operable as driving wheels, depending on the prevailing operating conditions. An articulated hauler may have a weight in the order of 15-30 metric tons and may be loaded with a payload in the order of 20-35 tons.

In an articulated hauler, the frame of the engine unit is connected to the frame of the load-carrying unit by means of a special articulation joint, allowing the engine unit and the load-carrying unit to pivot in relation to each other about an imaginary longitudinal axis, i.e. an axis extending in the longitudinal direction of the vehicle. This articulation joint also allows pivoting about a vertical axis for steering of the vehicle. In this manner, the engine unit and the load-carrying unit are allowed to move substantially independently of each other. This reduces the stress loads acting on the vehicle, especially when operating in difficult terrain.

Normally, an articulated hauler is equipped with a diesel engine and an automatic transmission having for example six forward gear ratios and two reverse gear ratios. For braking of the vehicle, an operating brake system is used, preferably of the hydraulic type and divided into two circuits, one circuit intended for the engine unit, another circuit intended for the load-carrying unit. Said brake system mainly comprises conventional disc brakes arranged for braking of the respective wheel. In the gear case, there is normally an integrated retarder, i.e. a hydraulic brake device that, in a known manner, acts on a turbine shaft of the transmission for braking the vehicle.

During braking of the hauler, the driver uses a brake pedal designed in such a way that when depressed, it will initially cause a retarder activation, and if depressed further, cause the retarder and the operating brakes to work together. The reason for first activating the retarder is the high thermal load affecting the operating brake during braking. Thus, by primarily using the retarder, a reduced wear of the operating brake system and an increased operator braking comfort will be achieved.

For braking the hauler, it is also suitably equipped with a separate retarder pedal that, when depressed, will only cause braking by means of the retarder.

Further, the hauler normally comprises an additional brake function in the form of a motor-brake, which is a normally occurring braking function at diesel engines. A motor-brake is controlled by means of a separate control and comprises a throttle that, when actuated, will restrict the flow of exhaust gases from the engine during its exhaust phase. This will create a back pressure in the exhaust system, causing a braking effect.

When working with an articulated hauler, there is a general demand that it shall be possible to run the vehicle at a velocity that is as high as possible. The choice of velocity has to be made considering expected costs that may occur as a consequence of service and possible repairs due to a too high velocity. In order to limit the velocity, the driver may brake with the operating brake. However, a present problem is that the ordinary disc brakes in the operating brake system not are designed to be used continuously for extended periods of time. This is in particular the case when braking in a downhill and with a heavy load. For such cases, the brakes may overload, which in turn may result in a reduced braking ability or heavily increased brake wear.

To spare the operating brake, primarily the retarder or the motor-brake shall be activated by the driver. However, an existing problem is that the driver not always pays attention to directions regarding which kind of brake that is the correct at different situations, but uses the operating brake too frequently. Thus, there is a risk that the driver not pays attention to instructions and directions concerning braking, but runs the vehicle too fast and uses the operating brake too much.

The above problem is especially serious when going downhill, and with heavy load. At such situations, it is possible that the velocity becomes too high, then there is a risk that the retarder and the exhaust gas brake do not deliver sufficient brake power, alternatively that the available cooling ability of the retarder and the motor-brake is insufficient for these brake functions. Then also the operating brake has to be used to reduce the machine's velocity. This brings about a risk for wear and damages on the operating brake system, according to what has been explained above.

US 4964679 discloses a system for surveillance of and control of a vehicle brake function, the system comprising a processor and an inclination sensor. The system is arranged to calculate a value of an expected braking distance for the vehicle. If the expected braking distance exceeds a predetermined value, a warning signal may be activated, or the vehicle speed may be automatically reduced.

US 5070959 discloses an electric propulsion system for a vehicle which is equipped with an ordinary brake and an electric brake, where the vehicle comprises means for automatic braking via the electric brake. A setting for automatic braking is automatically changed as a function of the vehicle's weight and its inclination, the setting being changed when the weight and inclination are changed providing an instantaneous maximum velocity.

### DISCLOSURE OF INVENTION

A major object of the present invention is to provide an improved arrangement for controlling the velocity of an articulated hauler, particularly when going downhill, whereby the problems discussed above will be resolved. This object is achieved by means of an arrangement, the characterising features of which are defined in the appended claim 1. The object is also achieved by means of a method, the characterising features of which are defined in the appended claim 7;

The invention is based on that said arrangement comprises a detector for detection of current inclination that is present for the vehicle in relation to a horizontal plane, and means for the determination of a value concerning the maximum allowed velocity of the vehicle in dependence of at least the value of said inclination.

By means of the invention, an advantage is obtained as it admits an optimal use of the vehicle's brake functions, which enables the vehicle to be run at a highest possible velocity in the long run, while, at the same time, the operating brake system is spared.

A further purpose with the invention is to provide an automatic limitation of the maximum velocity of a vehicle. For this purpose the brake functions of the vehicle are arranged to be activated automatically by means of a control unit, thus running below a predetermined maximum velocity while the brake functions are used optimally.

According to a preferred embodiment information regarding the current load of the vehicle and the current braking ability for the different brake functions may also be used and form a base for determining said maximum value concerning the vehicle's velocity.

### BRIEF DESCRIPTION OF DRAWINGS

The invention will be explained more fully in the following, with reference to a preferred embodiment example and the enclosed drawings, in which:
- figure 1: is a simplified side view, which shows an articulated hauler when going downhill, and
- figure 2: is a block diagram, which in simplified form shows the construction and function of the invention.

### PREFERRED EMBODIMENTS

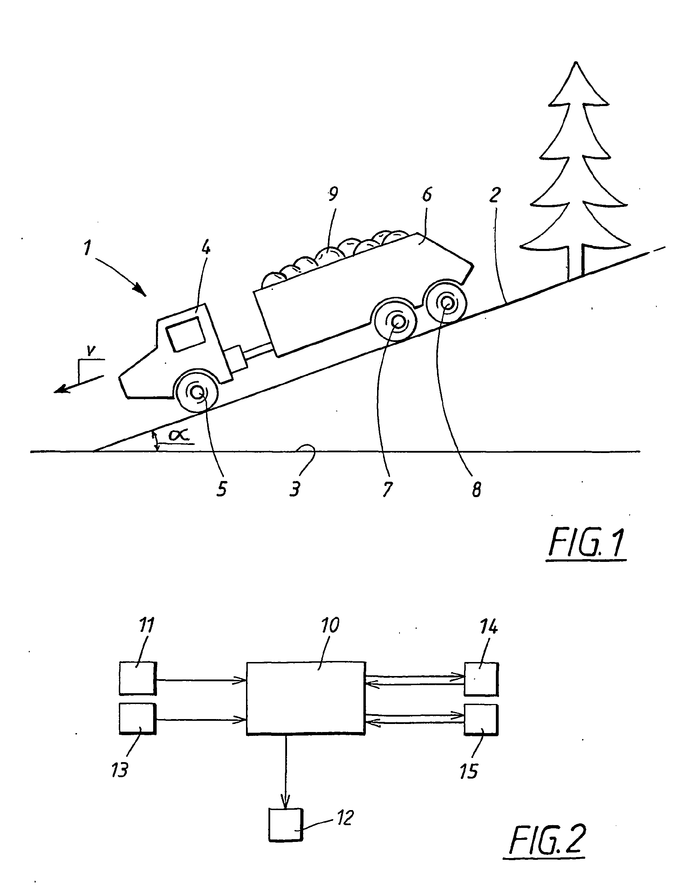

Fig. 1 shows a simplified side view of an articulated hauler 1 with which the present invention is intended to be used. However, the invention will not be limited for use with this kind of vehicle, but could in principle be used for all kinds of vehicles where it is desirable with a control or a limitation of the vehicle's velocity when the vehicle is going downhill, i.e. comprising a the determination of a maximum allowed velocity for such a driving case.

Figure 1 thus shows a situation where the articulated hauler 1 is run along a downhill 2. The downhill 2 has a certain inclination α in relation to a horizontal plane 3. The hauler 1 is assumed to be run in the downhill at a certain velocity v.

The articulated hauler is a type of vehicle that as such is previously known. In the following, the complete vehicle will not be described in detail, but only the components and functions of the vehicle necessary for an understanding of the invention.

The hauler 1 comprises an engine unit 4 with a front wheel axle 5, in a way previously known. The hauler 1 also comprises a load-carrying unit 6 having two wheel axles, i.e. a forward bogie axle 7 and a rear bogie axle 8. All these wheel axles 5, 7, 8 may be put on brake by an (not shown) operating brake system that suitably is arranged in the form of two brake circuits, a first brake circuit for the engine unit 4, and a second brake circuit for the load-carrying unit 6. The operating brake system comprises disc brakes that works on respective wheel of the hauler 1, in a way previously known. Further, the hauler is assumed to be loaded with a certain load 9 on the load-carrying unit 6.

Beside the above operating brake system, the hauler is also equipped with further brake functions, not shown in Fig. 1, but comprising a retarder, in the known manner integrated in the transmission of the hauler 1, arranged adjacent to the vehicle engine on the engine unit 4. A further brake function in the form of an engine brake is preferably also provided on the hauler 1. In a known manner, the engine brake comprises a throttle, controlled by a control member and utilised to prevent the outflow of exhaust gases from the engine during its exhaust phase. This will create a back pressure in the exhaust system, which can be used to brake the vehicle. The retarder as well as the engine brake can be activated by the driver by means of suitable controls. According to what will be described in detail below, the retarder and the engine brake may also, if necessary, be activated automatically by means of a dedicated control unit.

Due to the problem mentioned in the introduction, concerning a risk with a too high thermal load on the operational brake system, it is a basic principle behind the invention that a value of a maximum allowed velocity vₘₐₓ of the hauler 1 is calculated when running the downhill 2. Preferably, this value is calculated at periodically recurrent occasions within a certain predetermined interval. For this purpose, the hauler 1 comprises a computer-based control unit 10 that is arranged to determine a value of the maximum allowed velocity vₘₐₓ, depending on the inclination α of the current downhill 2, according to what is shown in the block diagram in figure 2. This value vₘₐₓ may then be considered to correspond to a velocity that the hauler 1 may be permitted to be run with, without risking permanent damage to the operational brake system.

In order to determine said maximum velocity vₘₐₓ, the control unit 10 comprises a table stored in a (not shown) computer memory, and which defines a relationship between the inclination α and the maximum velocity vₘₐₓ, that can be allowed for respective value of the inclination α.

In order to determine a value of the current inclination α, an inclination indicator 11 is arranged in the hauler and connected to the control unit 10. Inclination indicators are as such previously known, and will therefore not be described in detail here. The inclination indicator 11 according to the invention delivers a signal to the control unit 10 that corresponds to a value of the current inclination α of the hauler 1 (in its longitudinal direction) in relation to the horizontal axis 3. The hauler 1 may, for example, be expected to be run downhill with an inclination that may amount to 25°. From the information acquired by means of the inclination sensor 11, the control unit then uses the table mentioned above to determine a value of the maximum allowed velocity vₘₐₓ. This value may be indicated for the driver of the hauler 1, by way of example via a display unit 12 or similar, which then suitably is arranged in close vicinity of the driver's seat in the hauler 1.

Starting out with said information, the driver can see to that the maximum velocity vₘₐₓ never is exceeded, when going downhill 2. For this purpose, the driver may activate the different brake function of the hauler 1. Usage of the operating brake system then has to be restricted as far as possible. Instead, it is desired that the driver mainly uses the retarder and the motor-brake in order to brake the hauler 1 and adapt its velocity v in such a way that it never exceeds the indicated maximum value vₘₐₓ.

The information concerning maximum allowed velocity may also be transferred to the driver via, for example, a sound signal, suitably in the form of an alarm that sounds when the hauler 1 is about to reach a velocity corresponding to the maximum allowed. For this purpose, the control unit 10 is arranged to activate this alarm signal at (or in the vicinity of) a suitable limit concerning the maximum value, which in turn depends on the current inclination according to what has been explained above.

In order to create basis for a more accurate determination of the maximum velocity vₘₐₓ of the hauler 1, a value corresponding to the above-mentioned weight of the load 9 loaded on the hauler 1 may be determined by the control unit 10. For this purpose, the control unit 10 is preferably connected to an additional sensor 13 for this weight measure. Such sensors are as such previously known, and may suitably consist of one ore more tension sensors, which by an appropriate placement on the platform of the load-carrying unit 6 may be used to provide a measure corresponding to the weight of the load 9. As an alternative for this kind of sensors, a suitable sensor in connection to the suspension system (not shown) of the vehicle, where a measure of at which degree the vehicle rebounds during running may be used to estimate the weight of the load 9.

The value concerning the weight of the load 9 is delivered to the control unit 10. Depending on this measure, and also the above-mentioned measure concerning the downhill inclination α, the maximum allowed velocity vₘₐₓ of the hauler 1 may be determined by using a table stored in the control unit 10, which indicates a relationship between the inclination, the weight of the load and the allowed velocity.

For certain cases, it is not sufficient to only indicate the maximum velocity with said indicator 12 (and/or an alarm in the form of a sound signal). There is a risk that the driver not obeys the information concerning maximum allowed velocity. Then the invention may, instead, be used for an active, automatic control of one ore more additional brake functions in the brake system of the hauler 1. For this purpose, the control unit 10 is connected to and arranged for automatic activation of a retarder of the kind mentioned above, which in figure 2 is indicated schematically with the reference numeral 14. The control unit 10 is also arranged for control of the above-mentioned motor-brake in a corresponding way, which is indicated schematically with the reference numeral 15. In order to enable this control, the retarder as well as the motor-brake are arranged in such a way that they can be activated without the driver having to push a pedal or similar.

Thus the invention admits an active control of the retarder and/or motor brake function in dependence of a value of the maximum allowed velocity vₘₐₓ calculated by the control unit 10. Since it is important to avoid unnecessary use of the operating brake, the invention is arranged to activate, for example, the retarder at an early stage, when the hauler 1 is about to approach the maximum allowed velocity vₘₐₓ.

In order to create basis for a more accurate determination of the maximum velocity vₘₐₓ, the invention may be arranged to keep he information regarding the available brake moment of the retarder 14 and the motor-brake, respectively, available in the control unit 10. This information may then be considered at the calculation of the maximum allowed velocity vₘₐₓ. Concerning, for example, the retarder 14, it provides a brake moment that varies depending on the current gear and the current velocity of the hauler 1. The brake moment may be calculated by means of the control unit 10, by means of which a value of its available brake moment can be used when determining the maximum allowed velocity vₘₐₓ. The motor-brake 15 may also provide a brake moment depending on current gear and current velocity. The brake moment available at the retarder 14 and the motor-brake 15 may also be considered to depend on the cooling capacity available in the vehicle, which in turn depends on the surrounding outer temperature. Even a factor like that may be considered when determining the maximum allowed velocity vₘₐₓ. Finally, the operating brake of the hauler 1 is designed with a previously known (and constant) maximum brake moment.

The invention will not be limited to the embodiments described above and depicted in the drawings, but may be varied within the scope of the appended claims. For example, the invention is not limited to articulated haulers, but can be utilised with various types of vehicles, where there is a requirement for control or limitation of the velocity when going downhill, and which in particular comprises a motor-brake and/or a retarder.

Further, different types of sensors may be used for measuring the inclination of the downhill and the weight of the load.

Finally, other factors than those described above may be used for the determination of a value for vₘₐₓ concerning the maximum allowed velocity for the hauler 1. By way of example, a factor describing, for example, the current road conditions may be considered.

## Claims

1. Device for determination of the maximum allowable velocity (Vₘₐₓ) for a vehicle (1) when going downhill (2), where the vehicle (1) comprises a wheel brake system and at least one additional brake function (14, 15) and the device, **characterized in that** the device comprises an inclination indicator (11) for detection of the current inclination (α) of the vehicle (1) in relation to a horizontal plane (3), and a control unit (10) for determination of a value relating to the maximum allowable long-term velocity (Vₘₐₓ) of the vehicle (1) in dependence of at least the value of said inclination (α) and with the current braking ability of said at least one additional brake function (14, 15) taken into account, wherein the device comprises said control unit (10) which is adapted to actively control said at least one additional brake function (14, 15) when the vehicle (1) is going downhill (2) in dependence of the value of the maximum allowable long-term velocity (Vₘₐₓ) of the vehicle (1).

2. Device according to claim 1, **characterized in that** said control unit (10) is connected to an indicator device (12) for indication of the value (vₘₐₓ) concerning the maximum allowable velocity for the driver of the vehicle (1).

3. Device according to claims 1 or 2, **characterized in that** said control unit (10) is arranged for automatic activation of said at least one additional brake function (14, 15) in dependence of said maximum value (vₘₐₓ).

4. Device according to any of the preceding claims, **characterized in that** said at least one additional brake system comprises a retarder arranged in the vehicle (1).

5. Device according to any of the preceding claims, **characterized in that** said at least one additional brake system comprises a motor-brake arranged in the vehicle (1).

6. Device according to any of the preceding claims, where the vehicle (1) is arranged to carry a load (9) during running **characterized in that** it comprises a detector for detection of a measure corresponding to the weight of the load (9), which measure is used at determination of the value (vₘₐₓ) concerning the maximum velocity of the vehicle.

7. Procedure for determination of the maximum allowable velocity (Vₘₐₓ) for a vehicle (1) when going downhill (2), where the vehicle (1) comprises a wheel brake system and at least one additional brake function (14, 15) and the device, **characterized in that** it comprises:
detection of the current inclination (α) of the vehicle (1) in relation to a horizontal plane (3),
determination of the current braking ability of said at least one additional brake function (14, 15), and
determination of a value (Vₘₐₓ) relating to the maximum allowable long-term velocity of the vehicle (1) in dependence of at least the value of said inclination (α) and with the current braking ability of said at least one additional brake function (14, 15) taken into account.

8. Procedure according to claim 7, **characterized in that** it comprises indication of said maximum value (vₘₐₓ) for the driver of the vehicle (1).

9. Procedure according to claims 7 or 8, **characterized in that** the procedure comprises an automatic activation of said at least one additional brake function (14, 15) in dependence of said maximum value (vₘₐₓ).

10. Procedure according to any of the claims 7-9, **characterized in that** it comprises:
a detector for detection of a measure that relates to the current load (9) of the vehicle (1), and
determination of the value (vₘₐₓ) concerning the maximum velocity of the vehicle (1) in dependence of the measure that corresponds to the load (9) of the vehicle (1).

## Patentansprüche

1. Vorrichtung zur Bestimmung der zulässigen Höchstgeschwindigkeit (Vₘₐₓ) für ein Fahrzeug (1), wenn es bergab (2) fährt, wobei das Fahrzeug (1) ein Radbremssystem und mindestens eine weitere Bremsfunktion (14,15) und die Vorrichtung umfasst, **dadurch gekennzeichnet, dass** die Vorrichtung einen Neigungsindikator (11) zur Detektion der aktuellen Neigung (α) des Fahrzeugs (1) zu einer horizontalen Ebene (3) sowie eine Steuereinheit (10) zur Bestimmung, in Abhängigkeit von mindestens dem Wert der Neigung (α), eines die zulässige, langzeitige Höchstgeschwindigkeit (Vₘₐₓ) des Fahrzeugs (1) betreffenden Werts umfasst, und wobei die aktuelle Bremsfähigkeit der mindestens einen weiteren Bremsfunktion (14,15) berücksichtigt wird, wobei die Vorrichtung die Steuereinheit (10) umfasst, die eingerichtet ist, um abhängig von dem Wert der zulässigen, langzeitigen Höchstgeschwindigkeit (Vₘₐₓ) des Fahrzeugs (1) aktiv die mindestens eine weitere Bremsfunktion (14, 15) zu steuern, wenn das Fahrzeug (1) bergab (2) fährt.

2. Vorrichtung nach Anspruch 1, **dadurch gekennzeichnet, dass** die Steuereinheit (10) mit einer Indikatoreinrichtung (12) zum Anzeigen des Werts (Vₘₐₓ), der die zulässige Höchstgeschwindigkeit für den Fahrer des Fahrzeugs (1) betrifft, verbunden ist.

3. Vorrichtung nach Anspruch 1 oder 2, **dadurch gekennzeichnet, dass** die Steuereinheit (10) für die automatische Aktivierung der mindestens einen weiteren Bremsfunktion (14, 15) in Abhängigkeit vom Höchstwert (Vₘₐₓ) eingerichtet ist.

4. Vorrichtung nach irgendeinem der vorhergehenden Ansprüche, **dadurch gekennzeichnet, dass** das mindestens eine weitere Bremssystem eine im Fahrzeug (1) angeordnete Reaktionsbremse umfasst.

5. Vorrichtung nach irgendeinem der vorhergehenden Ansprüche, **dadurch gekennzeichnet, dass** das mindestens eine weitere Bremssystem eine im Fahrzeug (1) angeordnete Motorbremse umfasst.

6. Vorrichtung nach irgendeinem der vorhergehenden Ansprüche, wobei das Fahrzeug (1) eingerichtet ist, um im Betrieb eine Last (9) zu fördern, **dadurch gekennzeichnet, dass** sie einen Detektor zur Detektion eines Maßes, das dem Gewicht der Last (9) entspricht, umfasst, welches Maß bei der Bestimmung des die Höchstgeschwindigkeit des Fahrzeugs betreffenden Werts (Vₘₐₓ) angewendet wird.

7. Verfahren zur Bestimmung der zulässigen Höchstgeschwindigkeit (Vₘₐₓ) für ein Fahrzeug (1), wenn es bergab (2) fährt, wobei das Fahrzeug (1) ein Radbremssystem und mindestens eine weitere Bremsfunktion (14,15) und die Vorrichtung umfasst, **dadurch gekennzeichnet, dass** es folgendes umfasst: Detektion der aktuellen Neigung (α) des Fahrzeugs (1) zu einer horizontalen Ebene (3), Bestimmung der aktuellen Bremsfähigkeit der mindestens einen weiteren Bremsfunktion (14,15) sowie Bestimmung, in Abhängigkeit von mindestens dem Wert der Neigung (α), eines die zulässige, langzeitige Höchstgeschwindigkeit des Fahrzeugs (1) betreffenden Werts, und wobei die aktuelle Bremsfähigkeit der mindestens einen weiteren Bremsfunktion (14,15) berücksichtigt wird.

8. Verfahren nach Anspruch 7, **dadurch gekennzeichnet, dass** es das Anzeigen des Höchstwerts (Vₘₐₓ) für den Fahrer des Fahrzeugs (1) umfasst.

9. Verfahren nach Anspruch 7 oder 8, **dadurch gekennzeichnet, dass** das Verfahren eine automatische Aktivierung der mindestens einen weiteren Bremsfunktion (14, 15) in Abhängigkeit vom Höchstwert (Vₘₐₓ) umfasst.

10. Verfahren nach irgendeinem der Ansprüche 7-9, **dadurch gekennzeichnet, dass** es folgendes umfasst: einen Detektor zur Detektion eines Maßes, das die aktuelle Last (9) des Fahrzeugs (1) betrifft, und Bestimmung des die Höchstgeschwindigkeit des Fahrzeugs (1) betreffenden Werts (Vₘₐₓ) in Abhängigkeit von dem Maß, das der Last (9) des Fahrzeugs (1) entspricht.

## Revendications

1. Dispositif pour la détermination de la vitesse maximale autorisée (Vₘₐₓ) pour un véhicule (1) lors de la descente (2), le véhicule (1) comprenant un système de frein de roue et au moins une fonction de freinage supplémentaire (14, 15) et le dispositif, **caractérisé en ce que** le dispositif comprend un indicateur d'inclinaison (11) pour la détection de l'inclinaison actuelle (α) du véhicule (1) par rapport à un plan horizontal (3), et une unité de commande (10) pour la détermination d'une valeur relative à la vitesse maximale autorisée à long terme (Vₘₐₓ) du véhicule (1) en fonction d'au moins la valeur de ladite inclinaison (α) et avec la capacité actuelle de freinage de ladite au moins une fonction de freinage supplémentaire (14, 15) pris en compte, le dispositif comprenant ladite unité de commande (10) qui est adaptée pour commander de manière active ladite au moins une fonction de freinage supplémentaire (14, 15) lors de la descente (2) du véhicule (1) en fonction de la vitesse maximale autorisée à long terme (Vₘₐₓ) du véhicule (1).

2. Dispositif selon la revendication 1, **caractérisé en ce que** ladite unité de commande (10) est reliée à un dispositif indicateur (12) pour l'indication de la valeur (Vₘₐₓ) relative à la vitesse maximale autorisée pour le conducteur du véhicule (1).

3. Dispositif selon les revendications 1 ou 2, **caractérisé en ce que** ladite unité de commande (10) est agencée pour l'activation automatique de ladite au moins une fonction de freinage supplémentaire (14, 15) en fonction de ladite valeur maximale (Vₘₐₓ).

4. Dispositif selon l'une quelconque des revendications précédentes, **caractérisé en ce que** ledit au moins un système de freinage supplémentaire comprend un retardateur disposé dans le véhicule (1).

5. Dispositif selon l'une quelconque des revendications précédentes, **caractérisé en ce que** ledit au moins un système de freinage supplémentaire comprend un frein de moteur disposé dans le véhicule (1).

6. Dispositif selon l'une quelconque des revendications précédentes, dans lequel le véhicule (1) est agencé pour transporter une charge (9) lors de la course, **caractérisé en ce qu'**il comprend un détecteur pour la détection d'une mesure correspondant au poids de la charge (9), mesure qui est utilisée à la détermination de la valeur (Vₘₐₓ) concernant la vitesse maximale du véhicule.

7. Procédé pour la détermination de la vitesse maximale autorisée (Vₘₐₓ) pour un véhicule (1) lors de la descente (2), le véhicule (1) comprenant un système de frein de roue et au moins une fonction de freinage supplémentaire (14, 15) et le dispositif, **caractérisé en ce qu'**il comprend:
la détection de l'inclinaison actuelle (α) du véhicule (1) par rapport à un plan horizontal (3),
la détermination de la capacité actuelle de freinage de ladite au moins une fonction de freinage supplémentaire (14, 15), et
la détermination d'une valeur (Vₘₐₓ) relative à la vitesse maximale autorisée à long terme du véhicule (1) en fonction d'au moins la valeur de ladite inclinaison (α) et avec la capacité actuelle de freinage de ladite au moins une fonction de freinage supplémentaire (14, 15) prise en compte.

8. Procédé selon la revendication 7, **caractérisé en ce qu'**il comprend l'indication de ladite valeur maximale (Vₘₐₓ) pour le conducteur du véhicule (1).

9. Procédé selon les revendications 7 ou 8, **caractérisé en ce que** la procédé comprend une activation automatique de ladite au moins une fonction de freinage supplémentaire (14, 15) en fonction de ladite valeur maximale (Vmax).

10. Procédé selon l'une quelconque des revendications 7 à 9, **caractérisé en ce qu'**il comprend:
un détecteur pour la détection d'une mesure qui se rapporte à la charge actuelle (9) du véhicule (1), et
la détermination de la valeur (Vₘₐₓ) concernant la vitesse maximale du véhicule (1) en fonction de la mesure qui correspond à la charge (9) du véhicule (1).
